# EUROPEAN PATENT SPECIFICATION

(11) **EP 2 773 511 B1**
(45) Date of publication and mention of the grant of the patent: **18.05.2016**
(21) Application number: 11782403.7
(22) Date of filing: 31.10.2011
(51) Int. Cl.: B41L 21/02, B41J 3/60, B41F 21/10

(54) **DUPLEX SECTION**
WENDESEKTION
SECTION DUPLEX

(43) Date of publication of application: 10.09.2014
(73) Proprietor: Hewlett-Packard Indigo B.V., 6221 SH Maastricht (NL)
(72) Inventor: TURM, Asaf, 76101 Rehovot Ness Ziona (IL); GALILI, Ayal, 76101 Rehovot Ness Ziona (IL); WIENER, Ittai, 76101 Rehovot Ness Ziona (IL); BAREL, Assaf, 76101 Rehovot Ness Ziona (IL); GUTMAN, Dudi, 76101 Rehovot Ness Ziona (IL)
(74) Representative: Jennings, Vincent Louis
(86) International application number: PCT/EP2011/069162
(87) International publication number: WO 2013/064173

(56) References cited:
- JP-A- 2006 248 767
- US-A1- 2002 181 021
- US-A1- 2003 194 253
- US-A1- 2004 251 611
- US-A1- 2007 001 387
- US-A1- 2010 278 573
- US-B2- 6 883 426

## Description

### BACKGROUND

In printers a duplex system may be used to reverse a medium. For example, to apply an image to both sides of a print medium without requiring multiple image production sections, such as impression drums. Initially, an image is applied to a first side of the print medium by the image production section. A perfector or duplexer then reverses the print medium and returns the print medium to the image production section, such that an image may be applied to a second side of the print medium, opposite the first side. After the print medium has an image applied to the second side, it is removed from the image production section and transported to a device exit or subsequent processing unit.

In some applications the time taken for a print medium to be fully processed is a consideration. The perfector should ideally maintain registration between the images on respective sides of the print medium to within an accuracy determined by the application. This can be sensitive to different types and sizes of substrate. If excessive or insufficient force is applied the print medium may be deformed or become deregistered. In some cases, the processing of the print medium during registration may lead to undesirable scratching of the print medium. In some cases device footprint (e.g. floor space occupied by the device) is a consideration. Such a duplex system is known f.ex. from US6883426 B2,

Examples of the present invention have the aim of addressing one or more shortcomings of, or providing an improvement to, the prior art.

### BRIEF DESCRIPTION OF THE DRAWINGS

Examples of the invention are described hereinafter, by way of example only, with reference to the accompanying drawings, in which:
Figures 1a and 1b illustrate a duplex system in accordance with an example.
Figure 2 illustrates a duplex section in accordance with an example.
Figure 3 illustrates a transfer section according to an example.
Figure 4 is a flow chart illustrating a method according to an example.

### DETAILED DESCRIPTION

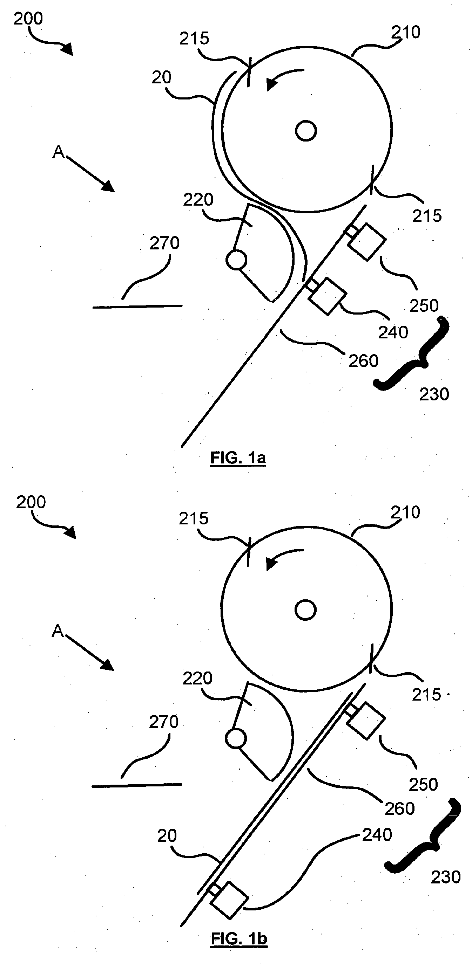

Figures 1a and 1b illustrates a duplex system 200 including a duplex section 230 according to an example of the invention. The present example provides a linear duplex section 230. The linear duplex section 230 receives print medium 20 that has been processed by a processing section 210 on a first face, and returns the print medium 20 to the processing section 210 for processing on a second face, opposite the first face. Prior to returning the print medium 20 to the processing section 210, the print medium 20 is linearly stretched while the being held substantially flat. In some examples, stretching the print medium 20 aids in registering the print medium 20.

The present example makes use of linear stretching, rather than stretching on a curved or non-linear path. In some arrangements, applying linear stretching reduces the force necessary to register the print medium. In some arrangements linear stretching leads to a reduction in sensitivity to the different print media. In some arrangements linear stretching may lead to a reduction in scratching and/or deformation of the print media, particularly where the stretching force is reduced. Accordingly, in some arrangements a broad range of print media types and sizes may be used and/or the quality of output media may be improved.

The example of Figure 1 includes a first retaining section 240 for receiving the print medium 20 from the processing section 210. The first retaining section 240 retains a first portion of the print medium. In the present example, the first portion is close to the leading edge (in the process direction) of the print medium, i.e. the edge of the print medium that is first received by the duplex section. The first retaining section 240 is linearly moveable relative to other members of the duplex section such that having retained the first portion close to the leading edge of the print medium, relative movement of the first retaining section causes the print medium to be drawn into the duplex section 230 such that a second portion of the print medium is suitably positioned for engagement by the second retaining section 250. In the present example the second portion is close to a second edge of the print medium. The second edge is a trailing edge of the print medium 20, or an edge of the print medium 20 substantially opposite the edge that is retained by the first retaining section. The first and second retaining sections 240, 250 are urged apart, relatively, such that the print medium 20 is stretched between the first and second retaining sections 240, 250. The first and second retaining sections 240, 250 are arranged such that the print medium is substantially flat, or planar, while being stretched. In the example of Figure 1 the stretching is performed along (substantially parallel to) the process direction; that is the direction along which the print medium will next be moved.

While the print medium is stretched, the second edge is fed back to the processing section 210 while the first retaining section 240 maintains a stretch, or tension, on the print medium. Alternatively or additionally, the second retaining section 250 may maintain the stretch or tension. Thus the second edge becomes the leading edge and the first edge becomes the trailing edge. The print medium is returned to the processing section 210 with two faces of the print medium being interchanged with respect to the processing of the processing section 210. In a preferred example the second edge of the print medium 20 is fed to the processing section with an acceleration of up to 9g₀, and more preferably up to 8g₀, where g₀ is the standard acceleration due to gravity (9.80665 m/s²).

According to some examples, the first and second retaining sections 240, 250 each include at least one suction cup for retaining the print member 20 by producing a reduced pressure between the suction cup and the print medium such that the print medium is retained against the suction cup by the pressure difference on opposite faces of the print medium.

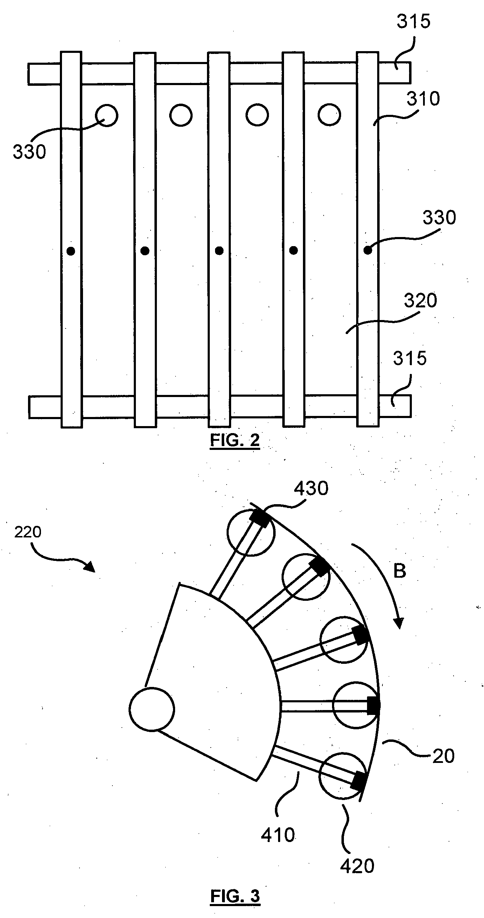

The example of Figure 1 includes a support section 260 for supporting and/or guiding the print medium 20 in the duplex section 230. Figure 2 illustrates a support section suitable for use in an example of the invention, viewed along the direction of arrow A in Figure 1a. The support section 260 includes a plurality of support members 310, which may be held together by one or more structural members 315, for example. In an alternative example the support members 310 are integrally formed. The support members 310 are arranged to support or guide the print medium 20 on or along a planar surface, perpendicular to the viewing direction of Figure 2. Each support member may have a flat surface for contacting the print medium, but the support members may also be cylindrical or any other shape, provided that the print medium is sufficiently flat or planar while being stretched by the first and second retaining sections 240, 250. The support members 310 have slots 320 between them, arranged to receive at least part 240' of the first retaining section 240. The part 240' of the first retaining section 240 extends at least part way through the slots 320 in order to enable retention of the print medium 20 by the first retaining section 240 when the print medium 20 is supported or guided by the support section 260. The slots 320 are arranged to permit linear movement of the first retaining section 240 relative to the support section 260. Other gaps or vacancies may be provided in the support section 260 in place of the slots 320.

According to some examples, the duplex section 230 is provided with one or more sensors 330 for detecting the print medium 20. Where a support section 260 is provided the sensors 330 may be provided in, on or fixed relative to the support section 260. Figure 2 illustrates an example in which the sensors 330 are located in the support members 310. The sensors 330 may be arranged to detect an edge of the print medium as relative motion takes the edge of the print medium past the sensor. According to one example, the sensors detect a leading edge (first edge) of the print medium when it is drawn into the duplex section. In the arrangement of Figure 1, this would correspond to detecting the edge in the region of the first retaining section 240. When the leading edge is detected by sensors 330 the registration of the print medium in the process direction can be confirmed and/or corrected. This results in a reduction in the accuracy required of the handshake or handshakes between the processing section 210 and the duplex section 230, and/or an improvement in the accuracy of the registration in the process direction.

Where a plurality of sensors 330 is provided it is possible to detect skew of the print medium in the duplex section, and this may facilitate skew correction. Alternative examples may provide sensors to sense the print medium in a different manner, instead of or in addition to the sensing scheme described above. For example, in one example the second edge of the print medium is detected when the print medium 20 has been received by the duplex system 230. Further, one or more edges of the print medium 20 may be detected as the print medium 20 is returned from the duplex section 230 to the processing section 210, instead of or in addition to detecting the edge(s) when the print medium is received.

Figure 1 illustrates a duplex system 200 according to an example of the invention. According to this example, in addition to a linear duplex section 230, a processing section 210 and a transfer section 220 are provided. According to this example, the transfer section is arranged to receive or collect a print medium 20 from the processing section 210 and transfer the print medium 20 to the duplex section 230 if the print medium 20 is to be returned to processing section 210. On the other hand, if the print medium 20 is not to be returned to the processing section 210, the transfer section 220 transfers the print medium 20 to the next stage of the process path. This may be a further processing section or may be a device exit, for example. Figure 1 illustrates the next stage of the process path as exit conveyor 270. Preferably the transfer section 220 receives the print medium 20 directly from the processing section 210 in a first handshake and transfers the print medium 20 directly to the duplex section 230 in a second handshake. In some examples, the second handshake is between the transfer section 220 and the first retaining section 240.

According to some examples, the transfer section 220 includes one or more suction cups to retain the print medium 20 while the print medium 20 is being transferred. According to some arrangements, a suction cup to suction cup handshake is performed between the transfer section 220 and the duplex section 230.

In examples that perform registration correction in the duplex section 230, the first and second handshakes need not maintain registration of the print medium 20, or may provide only approximate registration, since the registration is corrected subsequently in the duplex section 230.

In some examples, skew of the print medium may be detected and corrected. According to some examples, skew is detected based on input from one or more of sensors 330 in the duplex section 230, an inline scanning unit and a registration camera. According to some example, the transfer section 220 corrects detected skew. For example, parallelism of the medium retaining elements of the transfer section 220, arranged across a width direction of the print medium 20, may be adjusted from a zero position prior to receiving a print medium 20, and the parallelism restored by returning to the zero position after the print medium 20 has been received and prior to transferring the print medium 20 to the duplex section 230. Where the skew detection is performed by elements subsequent to the transfer section in the process path, the skew correction is applied to subsequent print media, assuming that the subsequent media will also be skewed by the same or a similar amount. The skew correction may be refined iteratively with each subsequent print medium 20.

In the example of Figure 1, the path between the processing section 210 and the duplex section 230 or next process stage 270 is curved.

Figure 3 illustrates a portion of a transfer section 220 that may be used in conjunction with the arrangement of Figure 1. The view in Figure 3 is parallel to the rotation axis of the transfer section 220 and perpendicular to the process direction, indicated by arrow B. The view is edge-on to the print medium 20. The transfer section 220 of Figure 3 is provided with a plurality of contact members 410 for contacting the print medium 20, the contact members 410 each have an enlarged head 420 for supporting the print member 20, the enlarged head 420 having a suction cup 430 for retaining the print medium 20. The enlarged heads may have rounded surfaces for contacting and supporting the print medium 20 on a curved path between the processing section 210 and the duplex section 230 or next process stage 270. The transfer section 220 may include a plurality of the elements shown in Figure 3 arranged side-by-side along the viewing direction of Figure 3 in order to provide contact members across the width of the print medium (the width being the dimension perpendicular to the process direction). Preferably, the contact members contact the print medium 20 substantially evenly over one face of the print medium 20.

In the example of Figure 1 the transfer section 220 is rotatable about an axis substantially perpendicular to the process direction and parallel to the print medium 20 path. With this arrangement, when the transfer section 220 receives the leading edge of the print member 20, rotation of the transfer section draws the leading edge of the print medium 20 along the process path to either the duplex section 230 or the next process stage 270.

The processing section 210 may be an image production section for producing an image on the print medium 20. For example, the processing section may include an impression drum for retaining the print medium, e.g. by holding with grippers, and an image applied to a side of the print medium facing away from the drum. The image may be applied by offset printing, possibly by digital offset printing.

The processing section 210 may perform a process that does not produce and image. For example the processing section may be a finishing section. Moreover, some examples may be used in equipment that does not impart an image to the medium. For example, the processing section may be an image scanner for digitally capturing an image from the medium.

In some examples a control section is provided. The control section may provide control signals to one or more of the components. The control section may also receive input from a user to adjust the operation of the device. Furthermore, the control section may receive input from one or more sensors of the device, and adjust the control signals accordingly. For example, the control section may receive input from sensors 330, determine whether a misregistration or skew condition exists, and provide control signals to the duplex section 230 or the transfer section 220 to correct any such condition that is detected.

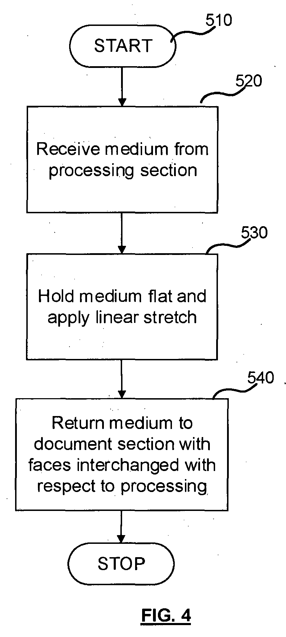

Figure 4 is a flow chart illustrating a method of processing a print medium according to an example of the invention. The method begins at 510. At 520 the print medium 20 is received by a duplex section 230 from processing section 210. At 530 the print medium 20 is linearly stretched by the duplex section 230 while the print medium 20 is held substantially flat. At 540 the print medium 20 is returned to the processing section such that the first and second faces are interchanged with respect to the processing of the processing section 210.

In some of the examples described above, suction cups are used to retain the print medium 20. However, other means may be used to retain the print medium 20, such as grippers.

In the example of Figure 1 the first retaining section 240 receives the print medium 20 when it enters the duplex section 230 and draws the print medium into the duplex section. In alternative arrangements the duplex section may include a conveyor, such as a vacuum conveyor, to receive the print medium 20 when it enters the duplex section 230, draw the print medium 20 into the duplex section 230 and transfer the print medium 20 to the first retaining section 240. In a further variation the transfer section 220 may place the print section 20 into the duplex section 230 and transfer the print medium 20 directly to the first retaining section 240.

In some examples, the print medium or retaining units are described as undergoing linear movement. However, in alternative examples non-linear movement may be used.

The example of Figure 1 includes a transfer section 220. In some alternative examples the duplex section 230 may receive the print medium 20 directly from the processing section 210.

Examples of the invention may be used in a media handling module. Such a media handling module may be used in, or in conjunction with, a printer or press.

References herein to an object or component moving are relative to other members or components. Accordingly, some examples the element described as moving may, in fact, be stationary while other elements are moved relative to it.

The print medium 20 (or more generally medium 20) may be in the form of a sheet. The medium is preferably paper, but may be plastic, metal or any other suitable material. Examples of the invention are particularly advantageous when the medium is flexible.

As used herein, stretch implies application of a stretching force or tension; it does not require any noticeable deformation of the object subjected to stretching.

## Claims

1. A device comprising:
a processing section (210) for processing a medium (20), the processing section (210) including a drum for retaining the medium (20); and
a duplex section (230) comprising:
a first retaining section (240) arranged to retain a first portion of the medium (20) received from the drum of the processing section (210), the medium (20) having first and second faces; and
a second retaining section (250) arranged to retain a second portion of the medium (20),
wherein the duplex section (230) is arranged such that
the medium (20) is held substantially flat by the first (240) and second (250) retaining sections,
the medium (20) is linearly stretched by the first (240) and second (250) retaining sections while being held substantially flat, **characterised in that** the duplex section is arrangement such that
while, or subsequent to, being stretched the medium (20) is returned to the drum of the processing section (210) with the first and second faces interchanged relative to the processing of the processing section (210).

2. The device according to claim 1, wherein the first and second portions of the medium (20) are proximal to respective opposite edges of the medium (20).

3. The device according to claim 1, further comprising a registration section, the registration section arranged to detect registration of the medium along a direction of travel of the medium (20) relative to the duplex section (230), and to correct the registration of the medium (20) where misregistration is detected.

4. The device according to claim 3, wherein the registration section comprises a sensor (330) arranged to detect an edge of the medium (20), the edge being the first edge received by the duplex section (230).

5. The device according to claim 1, wherein the first portion of the medium (20) is proximal to the edge of the medium (20) first received by the duplex section (230), and the second portion is proximal to an edge opposite the edge of the medium (20) first received by the duplex section (230).

6. The device according to claim 5, wherein the first retaining section (240) is linearly moveable relative to the second retaining section (250), such that when the medium (20) is received by the duplex section (230), the first portion is retained by the first retaining section (240), and the relative motion causes the second portion of the medium (20) to meet the second retaining section (250).

7. The device according to claim 1, further comprising:
a support section (260) for supporting or guiding the medium (20) such that the medium (20) is substantially flat; and
at least one slot (320) in the support section (260), the slot (320) arranged to receive at least part of the first retaining section (240) and permit linear movement of the part relative to the support section (260), such that the part can contact and retain the medium (20) and cause linear motion of the medium (20) relative to the support section (260).

8. The device (230) according to claim 1, wherein the duplex section (230) receives the medium (20) from the drum of the processing section (210) via a transfer section (220).

9. The device according to claim 1, further comprising:
a transfer section (220) arranged to receive the medium (20) from the processing section (210) and either:
transfer the medium (20) to the duplex system (230), or
transfer the medium (20) to a device exit (270) or further processing section (270).

10. The device according to claim 9, further comprising at least one sensor (330) arranged to detect a skew of the medium (20), wherein
the transfer section (220) is arranged to correct the skew of the medium by changing parallelism of medium retaining members between receiving the medium (20) and transferring the medium (20) to the duplex system (230).

11. The device according to claim 1, wherein the transfer section (220) includes at least one suction cup (430) arranged to retain the medium (20) for transfer to the duplex section (230) or to the device exit (270) or further processing section (270), and wherein
when the medium (20) is transferred to the duplex section (230), the medium (20) is transferred from the at least one suction cup (430) of the transfer section (220) to at least one suction cup of the first retaining section (240).

12. The device according to claim 1, wherein the processing section (210) is an image applying section.

13. A method of processing a medium (20), the method comprising:
receiving (520) the medium (20) from a drum of a processing section (210), the medium (20) having first and second faces;
linearly stretching (530) the medium (20) while the medium (20) is held substantially flat; **characterised by**
returning (540) the medium (20) to the drum of the processing section (210) such that the first and second faces are interchanged with respect to the processing of the processing section (210).

## Patentansprüche

1. Gerät, Folgendes umfassend:
einen Bearbeitungsabschnitt (210) zum Bearbeiten eines Mediums (20), wobei der Bearbeitungsabschnitt (210) eine Trommel zum Halten des Mediums (20) beinhaltet, und
einen Duplex-Abschnitt (230), der Folgendes umfasst:
einen ersten Halteabschnitt (240), der dafür angeordnet ist, einen ersten Teilbereich des Mediums (20) zu halten, der von der Trommel des Bearbeitungsabschnitts (210) ausgehend empfangen wurde, wobei das Medium (20) eine erste und eine zweite Fläche aufweist, und
einen zweiten Halteabschnitt (250), der dafür angeordnet ist, einen zweiten Teilbereich des Mediums (20) zu halten,
wobei der Duplex-Abschnitt (230) derart angeordnet ist, dass:
das Medium (20) vom ersten (240) und zweiten (250) Halteabschnitt im Wesentlichen flach gehalten wird,
das Medium (20) vom ersten (240) und zweiten (250) Halteabschnitt linear gestreckt wird, während es im Wesentlichen flach gehalten wird,
**dadurch gekennzeichnet, dass** der Duplex-Abschnitt (230) derart angeordnet ist, dass das Medium (20) während des Streckens oder danach zur Trommel des Bearbeitungsabschnitts (210) zurückgeführt wird, wobei die erste und die zweite Fläche im Verhältnis zum Bearbeiten des Bearbeitungsabschnitts (210) getauscht werden.

2. Gerät nach Anspruch 1, wobei der erste und der zweite Teilbereich des Mediums (20) nahe den entsprechenden entgegengesetzten Rändern des Mediums (20) liegen.

3. Gerät nach Anspruch 1, ferner einen Registerhaltigkeitsabschnitt umfassend, wobei der Registerhaltigkeitsabschnitt dafür angeordnet ist, eine Registerhaltigkeit des Mediums entlang einer Bewegungsrichtung des Mediums (20) im Verhältnis zum Duplex-Abschnitt (230) zu erkennen und die Registerhaltigkeit des Mediums (20) zu korrigieren, wenn eine fehlerhafte Registerhaltigkeit erkannt wird.

4. Gerät nach Anspruch 3, wobei der Registerhaltigkeitsabschnitt einen Sensor (330) umfasst, der dafür angeordnet ist, einen Rand des Mediums (20) zu erkennen, wobei der Rand der Rand ist, der zuerst vom Duplex-Abschnitt (230) empfangen wird.

5. Gerät nach Anspruch 1, wobei der erste Teilbereich des Mediums (20) nahe dem Rand des Mediums (20) liegt, der zuerst vom Duplex-Abschnitt (230) empfangen wird, und der zweite Teilbereich nahe einem Rand liegt, der gegenüber dem Rand des Mediums (20) liegt, der zuerst vom Duplex-Abschnitt (230) empfangen wird.

6. Gerät nach Anspruch 5, wobei der erste Halteabschnitt (240) im Verhältnis zum zweiten Halteabschnitt (250) derart linear beweglich ist, dass beim Empfangen des Mediums (20) durch den Duplex-Abschnitt (230) der erste Teilbereich vom ersten Halteabschnitt (240) gehalten wird und die relative Bewegung das Auftreffen des zweiten Teilbereichs des Mediums (20) auf den zweiten Halteabschnitt (250) bewirkt.

7. Gerät nach Anspruch 1, ferner Folgendes umfassend:
einen Stützabschnitt (260) zum Stützen oder Führen des Mediums (20) derart, dass das Medium (20) im Wesentlichen flach liegt, und
mindestens einen Schlitz (320) im Stützabschnitt (260), wobei der Schlitz (320) dafür angeordnet ist, mindestens einen Teil des ersten Halteabschnitts (240) aufzunehmen und die lineare Bewegung des Teils im Verhältnis zum Stützabschnitt (260) zu ermöglichen, so dass der Teil in Kontakt mit dem Medium (20) treten und dieses halten kann und die lineare Bewegung des Mediums (20) im Verhältnis zum Stützabschnitt (260) bewirkt.

8. Gerät nach Anspruch 1, wobei der Duplex-Abschnitt (230) das Medium (20) über einen Überführungsabschnitt (220) von der Trommel des Bearbeitungsabschnitts (210) empfängt.

9. Gerät nach Anspruch 1, ferner Folgendes umfassend:
einen Überführungsabschnitt (220), der dafür angeordnet ist, das Medium (20) vom Bearbeitungsabschnitt (210) zu empfangen und entweder
das Medium (20) zum Duplex-System (230) zu überführen oder
das Medium (20) zu einem Geräteausgang (270) oder einem weiteren Bearbeitungsabschnitt (270) zu überführen.

10. Gerät nach Anspruch 9, ferner mindestens einen Sensor (330) umfassend, der dafür angeordnet ist, einen Schräglauf des Mediums (20) zu erkennen, wobei
der Überführungsabschnitt (220) dafür angeordnet ist, zwischen dem Empfangen des Mediums (20) und dem Überführen des Mediums (20) zum Duplex-System (230) den Schräglauf des Mediums durch Ändern der Parallelität von Mediumhalteelementen zu korrigieren.

11. Gerät nach Anspruch 1, wobei der Überführungsabschnitt (220) mindestens einen Saugnapf (430) beinhaltet, der dafür angeordnet ist, das Medium (20) für die Überführung zum Duplex-Abschnitt (230) oder zum Geräteausgang (270) oder zu einem weiteren Bearbeitungsabschnitt (270) zu halten, und wobei das Medium (20) bei seiner Überführung zum Duplex-Abschnitt (230) von dem mindestens einen Saugnapf (430) des Überführungsabschnitts (220) auf mindestens einen Saugnapf des ersten Halteabschnitts (240) überführt wird.

12. Gerät nach Anspruch 1, wobei der Bearbeitungsabschnitt (210) ein bildaufbringender Abschnitt ist.

13. Verfahren zum Bearbeiten eines Mediums (20), wobei das Verfahren Folgendes umfasst:
Empfangen (520) des Mediums (20) von einer Trommel eines Bearbeitungsabschnitts (210), wobei das Medium (20) eine erste und eine zweite Fläche aufweist,
lineares Strecken (530) des Mediums (20), während das Medium (20) im Wesentlichen flach gehalten wird, **gekennzeichnet durch**
Zurückführen (540) des Mediums (20) zur Trommel des Bearbeitungsabschnitts (210) derart, dass die erste und die zweite Fläche im Verhältnis zum Bearbeiten des Bearbeitungsabschnitts (210) getauscht werden.

## Revendications

1. Dispositif comprenant :
une section de traitement (210) destinée à traiter un support (20), la section de traitement (210) comprenant un tambour destiné à retenir le support (20) ; et
une section duplex (230) comprenant :
une première section de retenue (240) adaptée pour retenir une première partie du support (20) reçue du tambour de la section de traitement (210), le support (20) comportant des première et seconde faces ; et
une seconde section de retenue (250) adaptée pour retenir une seconde partie du support (20),
la section duplex (230) étant disposée de telle sorte que
le support (20) est maintenu sensiblement à plat par les première (240) et seconde (250) sections de retenue,
le support (20) est étiré de manière linéaire par les première (240) et seconde (250) sections de retenue tout en étant maintenu sensiblement à plat, **caractérisé en ce que** la section duplex (230) est disposée de telle sorte que pendant ou après l'étirage, le support (20) est ramené au tambour de la section de traitement (210) avec les première et seconde faces interverties par rapport au traitement de la section de traitement (210).

2. Dispositif selon la revendication 1, dans lequel les première et seconde parties du support (20) sont situées à proximité des bords opposés respectifs du support (20).

3. Dispositif selon la revendication 1, comprenant en outre une section de cadrage, la section de cadrage étant adaptée pour détecter le cadrage du support le long d'une direction de déplacement du support (20) par rapport à la section duplex (230) et pour corriger le cadrage du support (20) lorsqu'un défaut de cadrage est détecté.

4. Dispositif selon la revendication 3, dans lequel la section de cadrage comprend un capteur (330) adapté pour détecter un bord du support (20), le bord étant le premier bord reçu par la section duplex (230).

5. Dispositif selon la revendication 1, dans lequel la première partie du support (20) est proche du bord du support (20) reçu par la première section duplex (230) et la seconde partie est proche d'un bord opposé au bord du support (20) reçu en premier par la section duplex (230).

6. Dispositif selon la revendication 5, dans lequel la première section de retenue (240) est mobile linéairement par rapport à la seconde partie de retenue (250) de telle sorte que, lorsque le support (20) est reçu par la section duplex (230), la première partie est retenue par la première section de retenue (240), et le mouvement relatif provoque la rencontre de la seconde partie du support (20) et de la seconde partie de retenue (250).

7. Dispositif selon la revendication 1, comprenant en outre :
une section de support (260) destinée à porter ou guider le support (20) de telle sorte que le support (20) est sensiblement plat ; et
au moins une fente (320) ménagée dans la section de support (260), la fente (320) étant adaptée pour recevoir au moins une partie de la première section de retenue (240) et permettre le mouvement linéaire de la partie relative à la section de support (260) de telle sorte que la partie peut entrer en contact avec le support (20), et le retenir, et provoquer le mouvement linéaire du support (20) par rapport à la section de support (260).

8. Dispositif (230) selon la revendication 1, dans lequel la partie duplex (230) reçoit le milieu (20) provenant du tambour de la section de traitement (210) par le biais d'une section de transfert (220).

9. Dispositif selon la revendication 1, comprenant en outre :
une section de transfert (220) adaptée pour recevoir le support (20) provenant de la section de traitement (210) et soit:
transférer le support (20) au système duplex (230) soit
transférer le support (20) à une sortie de dispositif (270) ou une autre section de traitement (270).

10. Dispositif selon la revendication 9, comprenant en outre au moins un capteur (330) adapté pour détecter un désalignement du support (20),
la section de transfert (220) étant adaptée pour corriger le désalignement du support par modification du parallélisme des éléments de retenue de support entre la réception du support (20) et le transfert du support (20) au système duplex (230).

11. Dispositif selon la revendication 1, dans lequel la section de transfert (220) comprend au moins une ventouse (430) adaptée pour retenir le support (20) pour transférer à la section duplex (230) ou à la sortie de dispositif (270) ou une autre section de traitement (270), et dans lequel,
lorsque le support (20) est transféré à la section duplex (230), le support (20) est transféré de ladite ventouse (430) de la section de transfert (220) à au moins une ventouse de la première section de retenue (240).

12. Dispositif selon la revendication 1, dans lequel la section de traitement (210) est une section d'application d'image.

13. Procédé de traitement d'un support (20), le procédé comprenant les étapes consistant :
à recevoir (520) le support (20) provenant d'un tambour d'une section de traitement (210), le support (20) comportant des première et seconde faces ;
à étirer linéairement (530) le support (20) pendant que le support (20) est maintenu sensiblement plat ; **caractérisé par**
le retour (540) du support (20) au tambour de la section de traitement (210) de telle sorte que les première et seconde faces sont interverties par rapport au traitement de la section de traitement (210).
